# EUROPEAN PATENT APPLICATION

(11) **EP 1 655 688 A2**
(43) Date of publication of application: **10.05.2006**
(21) Application number: 05077317.5
(22) Date of filing: 11.10.2005
(51) Int. Cl.: G06K 9/52, B60R 21/01

(54) **Object classification method utilizing wavelet signatures of a monocular video image**

(30) Priority: 26.10.2004 US 973584
(71) Applicant: Delphi Technologies, Inc., Troy, MI 48007 (US)
(72) Inventor: Zhang, Yan, Kokomo, IN 46902 (US); Kiselewich, Stephen J., Carmel, IN 46032 (US)
(74) Representative: Denton, Michael John

(57) **Abstract**

A stream of images including an area occupied by at least one object are processed to extract wavelet coefficients, and the extracted coefficients are represented as wavelet signatures that are less susceptible to misclassification due to noise and extraneous object features. Representing the wavelet coefficients as wavelet signatures involves sorting the coefficients by magnitude, setting a coefficient threshold based on the distribution of coefficient magnitudes, truncating coefficients whose magnitude is less than the threshold, and quantizing the remaining coefficients.

## Description

### TECHNICAL BACKGROUND

The present invention relates to techniques for processing sensor data for object classification, and more particularly to a method of processing wavelet coefficients of a monocular video image.

### BACKGROUND OF THE INVENTION

Various approaches have been used or suggested for classifying the occupants of a motor vehicle for purposes of determining if air bag deployment should be enabled or disabled (or deployed at reduced force) should a sufficiently severe crash occur. For example, a stream of images produced by a solid state vision chip can be processed to extract various image features, and the extracted features can be supplied to a neural network classifier (or other type of classifier) trained to recognize characteristics of particular objects of interest. See, for example, the U.S. Patent Nos. 6,608,910 and 6,801,662 and the U.S. Patent Application Publication No. 2003/0204384, each of which is incorporated herein by reference.

As mentioned in the aforementioned Publication No. 2003/0204384, the image processing can include extraction of wavelet coefficients of one or more imaged objects. This process, described for example by Oren et al. in IEEE Computer Society Conference on Computer Vision and Pattern Recognition, pgs. 193-199, 1997, involves characterizing regional variations in image intensity of an identified object. The Haar wavelet coefficients referred to in the above publications may be standard or over-complete, as explained by Oren et al.

### SUMMARY OF THE INVENTION

The present invention is directed to an improved method of processing wavelet representations of an imaged object for purposes of object classification. A stream of images including an area occupied by at least one object are processed to extract wavelet coefficients, and the extracted coefficients are represented as wavelet signatures that are less susceptible to misclassification due to noise and extraneous object features. Representing the wavelet coefficients as wavelet signatures involves sorting the coefficients by magnitude, setting a coefficient threshold based on the distribution of coefficient magnitudes, truncating coefficients whose magnitude is less than the threshold, and quantizing the remaining coefficients.

### BRIEF DESCRIPTION OF THE DRAWINGS

FIG. 1 is a block diagram depicting an occupant classification system utilizing the method of the present invention; and
FIG. 2 is flow diagram detailing a block of FIG. 1 pertaining to processing of wavelet coefficients according to the present invention.

### DESCRIPTION OF INVENTION

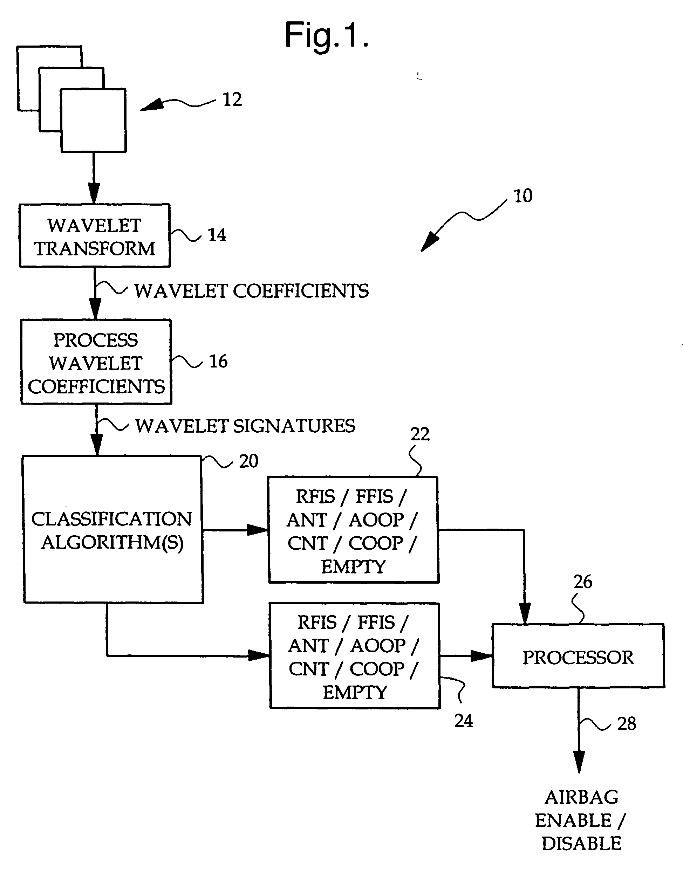

The method of the present invention is disclosed herein in the context of a system designated generally by the reference numeral 10 in FIG. 1 for classifying occupants of a motor vehicle for purposes of determining if air bag deployment should be allowed or suppressed (or deployed at reduced force) should a sufficiently severe crash occur. Nevertheless, it should be understood that the method of the present invention will find application in other types of imaging systems and methods involving object classification.

Referring to FIG. 1, the system 10 receives an image stream 12 as an input, and generates an output on line 28 for indicating if airbag deployment should be enabled or disabled. The image stream input is typically generated by one or more CMOS or CCD vision sensors embedded in an area surrounding a vehicle seat, such as in a rearview mirror or overhead console. Other imaging sensors such as radar or ultrasonic sensors may alternatively be used. The image stream 12 is supplied to the wavelet transform block 14, which extracts object information in the form of wavelet coefficients, which in turn are processed by block 16 to form wavelet signatures. The wavelet signatures are supplied to one or more classification algorithms represented by the block 20 that identify predefined wavelet signatures characteristics that are associated with the various possible classes of vehicle occupants. The classification algorithm is typically a trained network such as a neural network that is supplied with training data (i.e., wavelet signature data) from the various occupant classes. Examples of various classification algorithms are given in the aforementioned Publication No. 2003/0204384, incorporated herein by reference. In the illustrated embodiment, the classification algorithm(s) produces class probability and confidence values (as signified by the blocks 22 and 24) for each possible occupant class. The possible classes may include rear-facing infant seat (RFIS), front-facing infant seat (FFIS), adult in normal or twisted position (ANT), adult out-of-position (AOOP), child in normal or twisted position (CNT), child out-of-position (COOP), and empty. The class probability and confidence values are supplied to a processor 26 which makes a final decision as to whether and how airbag deployment should occur.

The present invention is directed to a method signified by the block 16 of FIG. 1 of processing wavelet coefficients in a manner to reduce the likelihood of occupant misclassification due to the presence of noise and/or extraneous object features. The processed wavelet coefficients are referred to herein as wavelet signatures, and the wavelet signatures are supplied to the classification algorithm(s) in place of the usual wavelet coefficients. The wavelet coefficient inputs to block 14 are produced by a wavelet transform function such as a Haar wavelet transform, whether standard or over-complete. In general, the wavelet transform responds to regional intensity differences at several orientations and scales. For example, three oriented wavelets -- vertical, horizontal, and diagonal -- are computed at different scales, possibly 64x64 and 32x32. The over-complete representation when utilized is achieved by shifting wavelet templates by 1/4 the size of the template instead of shifting the size of the template. A detailed description of wavelet coefficient calculation is given, for example, in the aforementioned publication by Oren et al., incorporated herein by reference.

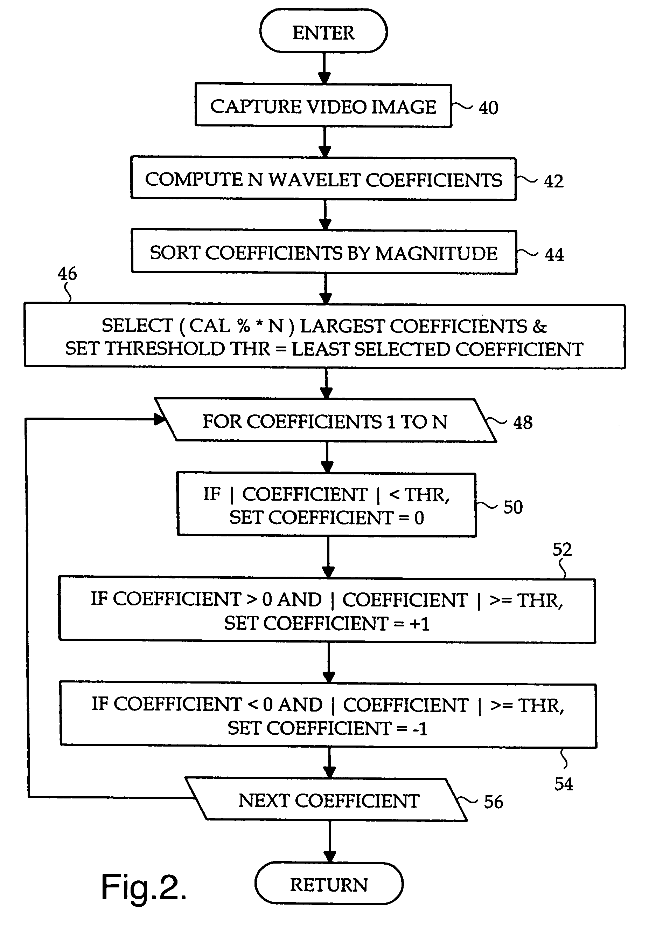

The process of computing wavelet coefficients and then transforming the computed coefficients into wavelet signatures according to this invention is depicted by the flow diagram of FIG. 2, which is also representative of a software routine executed by a suitably programmed microprocessor at each update of the image stream input. Once blocks 40 and 42 are executed to capture the new video image data and compute N wavelet coefficients, the blocks 44-56 are executed to convert the N wavelet coefficients into N wavelet signatures for application to the classification algorithm(s) 20. The block 44 sorts the N wavelet coefficients magnitude (i.e., absolute value), and the block 46 selects a threshold THR by selecting a set of coefficients having the highest magnitudes and setting THR to the least of the selected coefficients. The number of selected coefficients can be determined as a calibrated percentage (such as 50%, for example) of the total number N of coefficients, as indicated at block 46. In this way, the threshold THR is automatically adapted for the prevailing lighting and contrast conditions. Thereafter, the blocks 50-54 are executed for each of the N coefficients, as indicated by the FOR/NEXT blocks 48 and 50. The block 50 truncates (i.e., sets to 0) any coefficient whose magnitude is less than THR, and the blocks 52 and 54 quantize the remaining coefficients. Any positive coefficient having a magnitude greater than or equal to THR is set to +1 by the block 52. Any negative coefficient having a magnitude greater than or equal to THR is set to -1 by the block 54. The conversion from wavelet coefficients to wavelet signatures is complete when each of the N wavelet coefficients determined at block 42 is re-valued to 0, +1 or -1.

Converting the wavelet coefficients to wavelet signatures as described above in reference to FIG. 2 provides improved classification performance because the truncation and quantization essentially removes the noise and non-critical features in the image data. The same approach may also be used with wavelets other than the aforementioned Haar wavelets, such as Daubechies wavelets, Gaussian wavelets, etc.

In summary, the method of the present invention provides improved classification performance based on extraction of image features with wavelet coefficients. The conversion of wavelet coefficients to corresponding wavelet signatures is easily performed, and has been shown to provide enhanced classification accuracy and reliability with various types of wavelet coefficients, and under various lighting and ambient conditions. While the method of the present invention has been described in reference to the illustrated embodiment, it will be understood that various modifications in addition to those mentioned herein will occur to those skilled in the art. For example, other image extraction techniques such as edge detection and density mapping may be used in conjunction with the described wavelet signatures, the wavelet signatures may be used with various types of classifiers, the method may involve more than one level of quantization, and so on. Accordingly, it is intended that the invention not be limited to the disclosed embodiment, but that it have the full scope permitted by the language of the following claims.

## Claims

1. A method of object classification, comprising the steps of:
receiving images of an area occupied by at least one object;
extracting wavelet coefficients from the images;
truncating and quantizing said wavelet coefficients to form wavelet signatures; and
classifying the object based on specified characteristics of said wavelet signatures.

2. The method of claim 1, including the steps of:
truncating wavelet coefficients having a magnitude that is less than a threshold; and
quantizing wavelet coefficients having a magnitude that is at least as great as said threshold.

3. The method of claim 1, including the steps of:
assigning a zero value to wavelet coefficients having a magnitude that is less than a threshold;
assigning a predefined positive value to wavelet coefficients that are positive and have a magnitude that is at least as great as said threshold; and
assigning a predefined negative value to wavelet coefficients that are negative and have a magnitude that is at least as great as said threshold.

4. The method of claim 2, including the step of:
determining said threshold based on said wavelet coefficients and their magnitudes.

5. The method of claim 4, including the steps of:
sorting said wavelet coefficients by magnitude;
selecting a group of highest magnitude wavelet coefficients;
identifying a lowest magnitude wavelet coefficient of said group; and
setting said threshold equal to a magnitude the identified wavelet coefficient.
